# EUROPEAN PATENT APPLICATION

(11) **EP 2 404 509 A1**
(43) Date of publication of application: **11.01.2012**
(21) Application number: 11173214.5
(22) Date of filing: 08.07.2011
(51) Int. Cl.: A23L 1/30, A23L 1/305, A23J 1/00, A23J 1/14, C12H 1/04, A23J 3/14, A23L 1/211, A23L 1/212, C12F 3/06

(54) **Grape seed extracts, method of preparation and use thereof for treating wines**

(30) Priority: 08.07.2010 IT PD20100214
(71) Applicant: Universita' Degli Studi Padova, 35122 Padova (IT)
(72) Inventor: Curioni, Andrea, 36100 VICENZA (IT); Vincenzi, Simone, 31053 PIEVE DI SOLIGO (IT)
(74) Representative: Gervasi, Gemma

(57) **Abstract**

It is disclosed a grape seed extract containing proteins and a method of preparation thereof suitable for use in the oenological field for organoleptic improvement, clarification and stabilization of wines by protein fining.

## Description

### Field of the invention

The invention relates to grape seed extracts usable in the oenological field for improving the organoleptic characteristics and for clarification/stabilization of wines and to a method of preparing said extracts. The invention further relates to the use of grape seed extracts for organoleptic improvement and clarification/stabilization of wines by means of a protein fining agent.

### Prior art

The first approach when assessing a wine, i.e. visual examination, includes among its parameters the degree of clarity, which depends on the presence or absence of particles in suspension. Although in the past a cloudy wine, i.e. with a certain degree of turbidity, was accepted by the consumer, since it instilled a feeling of genuineness, of natural or rustic manufacture, today clarity is an essential requirement, i.e. a condition which, if not respected, penalizes the presentation, and even affects the overall sensory assessment of the wine, except for example in the case of wines that have been aged for a long time.

In the case of a new wine, there are numerous particles in suspension, generally consisting of dregs of yeasts and residues of vegetable particles. To obtain clarity suitable for bottling, a set of operations is employed such as decanting, filtration or centrifugation, with the aim of clarifying the liquid. The clarity obtained using these techniques is not definitive, however, bearing in mind the several natural phenomena that can take place in wine over the longer or shorter term. In fact, clouding can also be due to the presence of unstable colloidal substances which, after clarification, remain in solution, but are liable to flocculate subsequently, with appearance of new clouding or sediments. Therefore, it is not sufficient to obtain clarity of a wine at the moment of bottling, it is also necessary to guarantee that this state is maintained up to the moment of consumption, regardless of the duration and temperature of storage of the bottle.

Regarding the interventions applied for this purpose, two different problems are to be distinguished: on the one hand obtaining clarity, and on the other hand maintaining it until the moment of consumption. The techniques finding widest application for achieving these objectives include the practice of fining, which has the dual effect of clarifying and stabilizing the wine.

Wine is a colloidal system, in which the colloids are represented by proteins, polysaccharides, protein-polyphenol and protein-polysaccharide aggregates. A colloidal solution consists of particles that are maintained in dispersion in a liquid by a number of forces, including electrostatic repulsion and hydrophilicity. The latter provides a hydration layer around the macromolecule which helps to keep it suspended. Under the action of various factors, however, the (invisible) colloidal particles can aggregate (flocculation), forming particles that are visible as turbidity, which can eventually settle to the bottom of the bottle. To prevent the phenomenon of clouding, a treatment is applied to the wine (called protein fining) which causes the early removal, by precipitation, of the unstable colloids, obtaining both a clarifying and a stabilizing effect. The technique comprises adding, to a wine with a certain degree of turbidity (already present and/or potential), a proteinaceous substance that is able to flocculate and settle, entraining with it the particles responsible for any turbidity that is already present, but also those that are potentially able to cause clouding at a later date. The insoluble material resulting from the treatment is then easily removed from the wine. Moreover, addition of proteins leads to interaction between tannins and proteins, which occurs through a combination of bonds of the hydrogen type and hydrophobic interactions, leading to precipitation of the tannin-protein complex. This interaction, as well as leading to the removal of potentially unstable components (tannins), also results in reduction of the astringency due to the presence of tannins. Reduction of astringency can be very useful for mellowing red wines, which must be consumed young. The practice of fining therefore causes, in a red wine, clarification, stabilization and positive organoleptic effects (decrease of astringency).

The products commonly used in fining of wines are protein preparations of animal origin, such as gelatins extracted from animal bones, isinglass, egg proteins, products derived from blood, milk and derivatives (casein). In recent years, problems relating to hygiene and health, such as the case of BSE (bovine spongiform encephalopathy), have led some producers of oenological aids to turn their attention to the possibility of using proteins of vegetable origin (Maury, C. et al., 2003, Am. J. Enol. Vitic. 54: 105-111), for example those derived from wheat gluten, which have proved effective in the process of wine clarification (Marchal, R. et al., 2002, J. Agric. Food Chem. 50: 177-184; Restani, P. et al., 2002, Int. J. Tissue React. 24: 45-51). These first, encouraging results led to other vegetable protein materials being considered (soya, beans, peas, lupin, rice, Maury, C. et al., 2003, *ref.cit.).*

Most of the exogenous proteins, both animal and vegetable, used or usable in the fining of wines can, however, potentially cause health-related problems for consumers. Leaving aside concerns about BSE that might result from the use of bovine gelatin, particular attention must be paid to concerns relating to consumers with particular pathologies, in particular coeliac disease (due to gluten proteins) and food allergies. In fact, most proteins used for fining of wines are derived from allergenic materials, as listed in Appendix III of Community Directive 2003/89/EC (as amended) referring to allergenic foodstuffs. In particular, the list also includes eggs and egg-based products, milk and milk-based products, cereals containing gluten, soya and soya-based products, lupins and lupin-based products, all of which are products that must be declared on labels of food products, including wine. In fact, even though the proteinaceous oenological aids used in fining of wine should not, in practice, remain in the finished product, it is important to bear in mind that the presence of residues of said proteins cannot be ruled out, thus representing a potential risk to the health of consumers who are sensitive to the raw material from which the oenological clarifiers were extracted. Although on one hand it has been observed that the residues of gluten in treated wines are very low, and therefore said products could be considered almost safe for coeliac subjects (Marchal, R. et al., 2002, *ref.cit.*; Marchal, R. et al., 2003, J. Agric. Food Chem. 51: 2040-2048; Cattaneo, A. et al., 2003, Int. J. Tissue React. 25: 57-64; Restani, P. et al., 2002, *ref.cit.)*, the situation might be more complicated for allergy sufferers, since the dose of allergen sufficient to trigger an immune reaction can be extremely low, and cannot be defined precisely.

Taking account of the problem and the available scientific data, community and national legislation relating to the "presentation and labelling of foodstuffs" has therefore gradually been improved so as to be more complete and provide greater clarity regarding information about the composition of allergenic ingredients present even only at trace levels or as residues. Moreover, the possibility of using protein-based allergenic aids without the obligation of mentioning this on the label still seems very remote, also based on the numerous opinions supplied on this subject by the European Food Safety Authority (EFSA), charged by the European Commission with assessing risk on the basis of scientific tests.

In the light of all these facts, there is a need to develop protein aids alternative to those commonly used, which, proving to be effective in the fining of wines, could protect both the producers and the consumers of wine from the problems described. In fact, owing to the limits and disadvantages mentioned above regarding substances to be used for clarification of wine, the availability of substances suitable for clarification of wine and not potentially dangerous is still a need in the oenological sector.

Accordingly, the aim of the present invention is to provide a protein product, of homologous origin relative to the wine itself, for use in the fining of wines, thus avoiding recourse to materials extraneous to grapes.

### Summary

For the aforementioned aim, the inventors have identified an extract derived from vegetable materials homologous to the product to be treated, namely wine, having the necessary characteristics for use as oenological aid in the fining of wine and have developed a method of preparation suitable for obtaining said extract. For this use, the extract must have a minimum protein content, such as to produce an effective fining process, and at the same time should have a content of polyphenols that does not affect the organoleptic properties of the wine treated or to be treated.

Therefore, in a first aspect the present invention relates to compositions comprising grape seed extracts, having a content of protein nitrogen (measured as mineral nitrogen multiplied by a conversion factor of 6.25) in an amount higher than at least 30% (w/w) and polyphenols (determined with Folin-Ciocalteu reagent) in an amount lower than 40% (w/w).

To obtain the extract with characteristics suitable for use in the treatment of wine, it was necessary to develop a method of preparation able to extract the maximum possible amount of protein material from grape seeds and at the same time limit the extraction of polyphenols from them. This aspect is particularly problematic as the polyphenols are aggregated tenaciously with the proteins, and are therefore very difficult to remove from the extract, and their presence can have consequences for the final organoleptic characteristics of the wine treated. Accordingly, in another aspect, the present invention relates to a method of preparation of compositions comprising grape seed extracts, having the characteristics stated above, comprising at least the steps of:
- submitting materials obtained from grape seeds to extraction with an aqueous solution at a pH between 8.5 and 10.5;
- separating the liquid phase from the solid residue;
- acidifying the liquid phase to at least pH 3.0 to separate the protein fraction by precipitation;
- separating the precipitate obtained.

The starting materials can be either fresh grape seeds or residues from extraction of grape seed oil. Preferably, when the materials on which extraction is performed consist of fresh grape seeds, these are subjected to a step of grinding and delipidation by treatment with an organic solvent before extraction. The solid residue obtained from the first extraction can be removed or submitted, as it is or combined with new material from grape seeds, to one or more further extractions. Moreover, the protein precipitate obtained by acidification can be purified by subsequent dialysis.

The purposes and the advantages of the grape seed extracts and of the method of preparation thereof, to which the present invention relates, will be better understood from the detailed description given below, which will describe, as nonlimiting examples of the invention, with the aid of the drawings, a preferred embodiment of the method of preparation of the extract, characterization thereof and use thereof in the clarification of wine.

### Brief description of the drawings

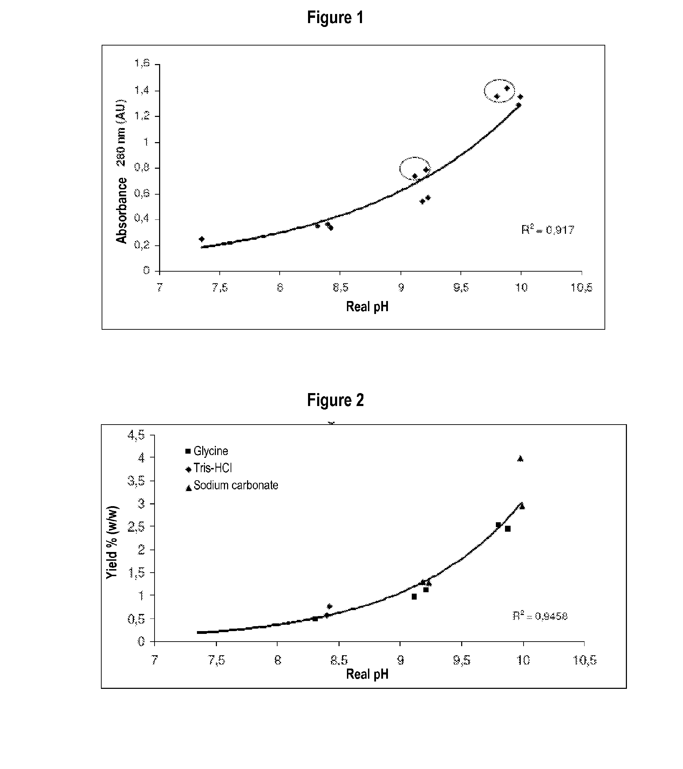

**Fig. 1****.** This figure shows the relation between absorbance at 280 nm of the extracts obtained from the first extraction and the measured pH. The values corresponding to the extracts in glycine are shown in the ovals.
**Fig. 2****.** This figure shows the relation between the yield by weight of precipitate at acid pH of the extracts obtained from the first extraction with various buffers, expressed in percentage by weight of grape seed flours, and measured pH. The values corresponding to the extracts in glycine are shown in the ovals.

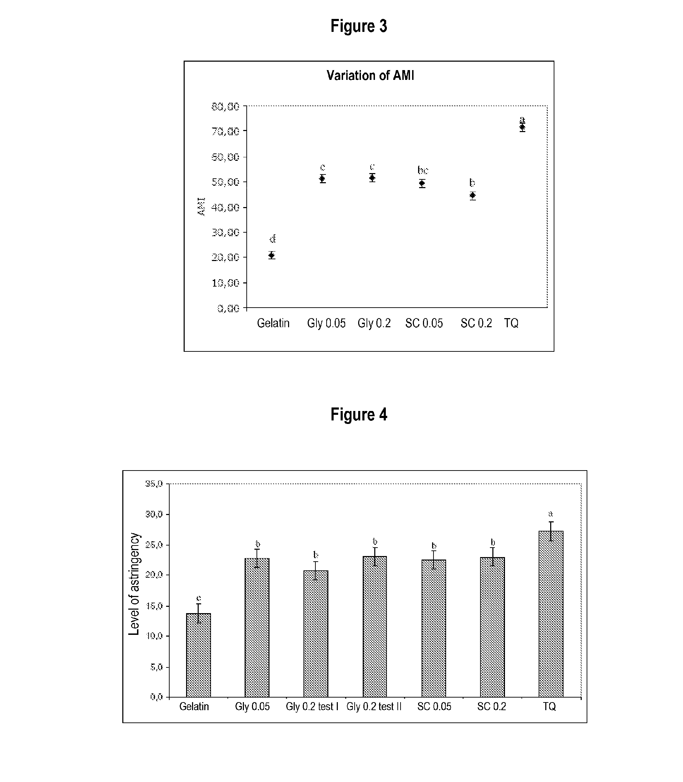

**Fig. 3****.** This figure shows determination of the AMI index on a solution of grape seed tannins (Graptan) (1.8 mg/ml) treated overnight with 20 g/hL of gelatin or with 40 g/hL of protein preparations obtained with two buffers (glycine Gly, and sodium carbonate SC) at two different concentrations (0.2 and 0.05M) and then filtered. Different letters indicate samples significantly different from one another (Least Significant Difference LSD: 1.575).
**Fig. 4****.** This figure shows the level of astringency perceived by a panel of trained tasters on a solution of grape seed tannins (Graptan) (1.8 mg/ml) treated overnight with 20 g/hL of gelatin or with 40 g/hL of protein preparations obtained with two buffers (glycine Gly, and sodium carbonate SC) at two different concentrations (0.2 and 0.05M) and then filtered. Different letters indicate samples significantly different from one another (LSD: 3.41).

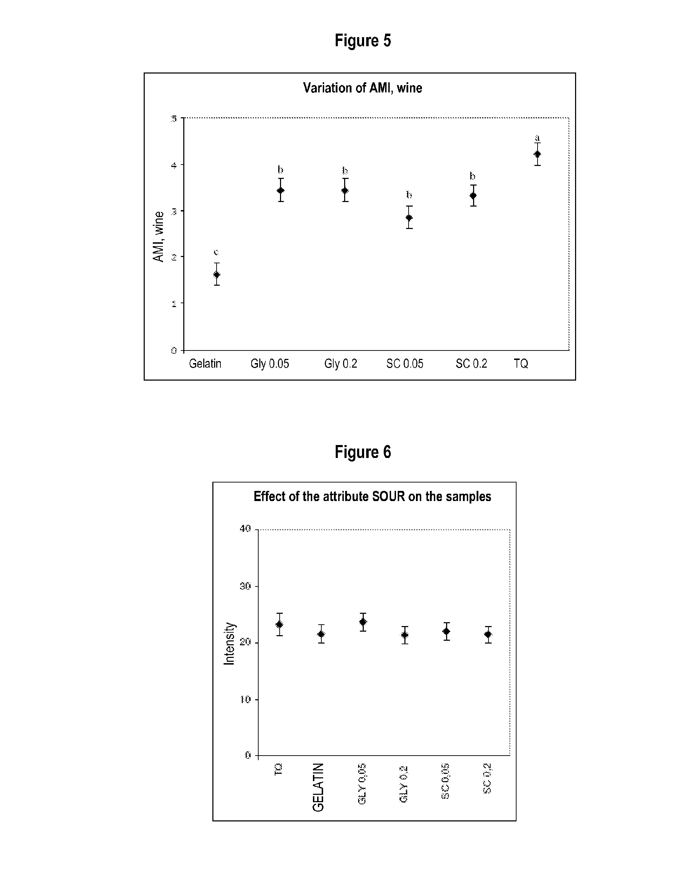

**Fig. 5****.** This figure shows determination of the AMI index on polyphenols extracted from a Cabernet Sauvignon wine treated overnight with 20 g/hL of gelatin or with 40 g/hL of protein preparations obtained with two buffers (glycine Gly, and sodium carbonate SC) at two different concentrations (0.2 and 0.05M) and then filtered. Different letters indicate samples significantly different from one another (LSD: 0.242).
**Fig. 6****.** This figure shows the level of acidity perceived by a panel of trained tasters on a Cabernet Sauvignon wine treated overnight with 20 g/hL of gelatin or with 40 g/hL of protein preparations obtained with two buffers (glycine Gly, and sodium carbonate SC) at two different concentrations (0.2 and 0.05M) and then filtered.

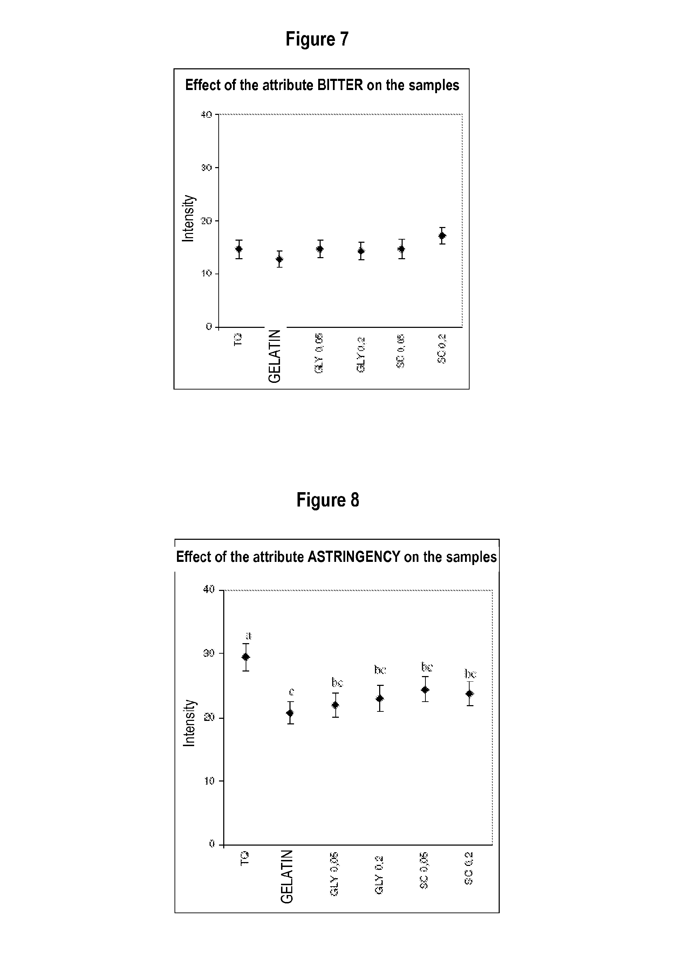

**Fig. 7****.** This figure shows the intensity of bitter taste perceived by a panel of trained tasters on a Cabernet Sauvignon wine treated overnight with 20 g/hL of gelatin or with 40 g/hL of protein preparations obtained with two buffers (glycine Gly, and sodium carbonate SC) at two different concentrations (0.2 and 0.05M) and then filtered.
**Fig. 8****.** This figure shows the level of astringency perceived by a panel of trained tasters on a Cabernet Sauvignon wine treated overnight with 20 g/hL of gelatin or with 40 g/hL of protein preparations obtained with two buffers (glycine Gly, and sodium carbonate SC) at two different concentrations (0.2 and 0.05M) and then filtered. Different letters indicate samples significantly different from one another (LSD: 3.87).

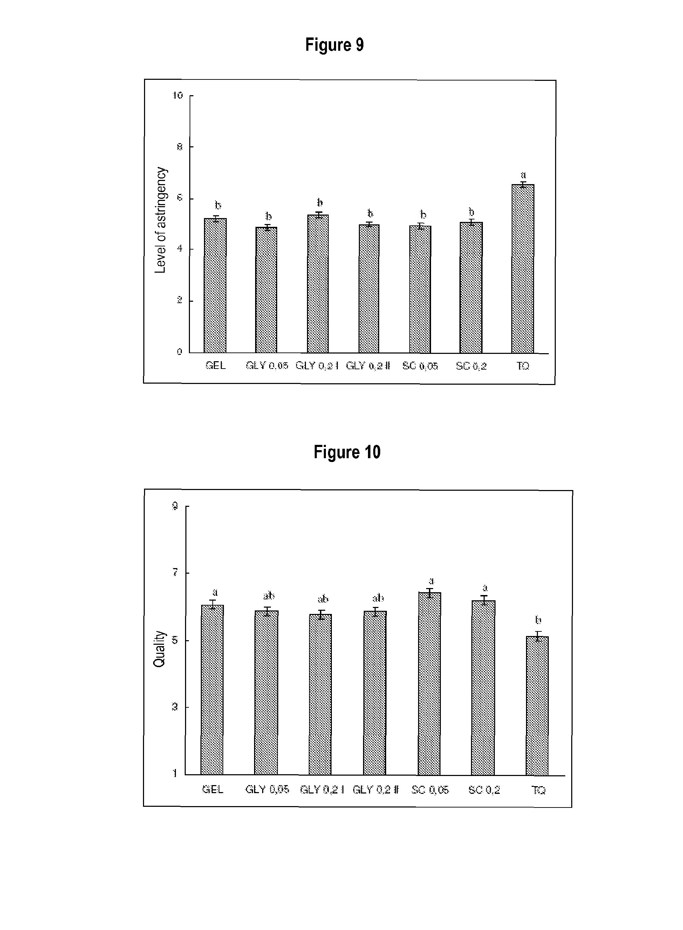

**Fig. 9****.** This figure shows the level of astringency perceived by a panel of expert tasters on a Cabernet Sauvignon wine treated overnight with 20 g/hL of gelatin or with 40 g/hL of protein preparations obtained with two buffers (glycine Gly, and sodium carbonate SC) at two different concentrations (0.2 and 0.05M) and then filtered. Different letters indicate samples significantly different from one another (LSD: 0.62).
**Fig. 10****.** This figure shows the overall quality level perceived by a panel of expert tasters on a Cabernet Sauvignon wine treated overnight with 20 g/hL of gelatin or with 40 g/hL of protein preparations obtained with two buffers (glycine Gly, and sodium carbonate SC) at two different concentrations (0.2 and 0.05M) and then filtered. Different letters indicate samples significantly different from one another (LSD: 0.74).

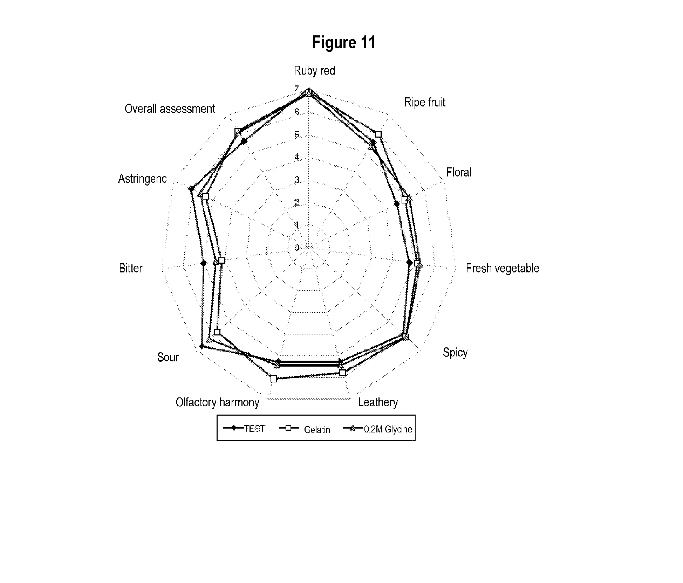

**Fig. 11****.** This figure shows the visual, olfactory and gustatory descriptors perceived by a panel of expert tasters on a Cabernet Sauvignon wine treated overnight with 20 g/hL of gelatin or with 40 g/hL of protein preparations obtained from grape seeds extracted with 0.2M glycine and then filtered. Comparison with the same wine without treatment (TEST).

### Detailed description of the invention

As already explained, the practice of protein fining (or clarification) of wines cannot generally be avoided and therefore the use of a protein aid actually derived from grapes, in particular from grape seeds, would make it possible to avoid having to declare, on the label, the possible presence of exogenous substances, overcoming problems connected with risk to the health of consumers with allergies. Moreover, utilization of a by-product from the processing of grapes, but also from the grape seed oil industry (whose main destination at present is combustion), might increase the value of the vine growing and wine producing chain as a whole. We should also not underestimate the effect on wine's image, which might benefit from non-use, during the winemaking process, of substances extraneous to grapes, such as the protein aids used in current practice. Taking these considerations into account, it is quite clear that an extract with high protein content obtained from grape seeds offers undoubted advantages.

However, a key problem is to obtain a product that has a minimum content of proteins so as to produce efficient clarification of the wine treated without causing organoleptic changes of the latter due to a high content of polyphenols, which are difficult to remove from said extract.

For preparation of the grape seed extract according to the invention, the first technical aspect to be solved is on which type of material to carry out extraction, being this one the key step of the entire process of preparation of the extract. In this connection, it has been found that the vegetable material can be either fresh material (grape seeds) or processing residues from extraction of oil (so-called extraction flour). However, in the case fresh grape seeds are used, it is necessary to combine grinding with a step of delipidation of said grape seeds, since the presence of high concentrations of lipids can adversely affect the extraction of proteins (Byers, M. et al., 1983, J. Sci. Food Agric. 34: 447-462). Accordingly, the flours obtained after industrial extraction of oil from grape seeds, already being by their nature free from lipids, are to be preferred. In contrast, when starting from fresh grape seeds it is necessary to treat them with an excess of organic solvents suitable for extracting the lipids. Preferably the organic solvents are selected from hexane and petroleum ether.

The main parameter to be taken into account for extraction of the proteins from the delipidated vegetable material is the pH. Some previous studies have already demonstrated that the extraction yield of proteins from grape seeds is higher at basic pH values. In particular, starting from a minimum extraction of 10% in water, it is possible to reach an extraction of more than 30% of total nitrogen at pH 12 (Castriotta, G. and Canella, M., 1978, J. Agric. Food Chem. 26: 763-765). However, the use of such high pH values has the drawback of also extracting large amounts of polyphenols, the latter being very soluble in a basic environment, as can be deduced from the intense brown coloration of the extracts (Castriotta and Canella, 1978, *ref. cit.*; Fazio, G. et al., 1983, Riv. Soc. Ital. Sci. Alim. 6: 469-478).

In order to have a good yield of proteins and, at the same time, limit the extraction of polyphenols, extraction must therefore be carried out with water at a pH between 8.5 and 10.5, using an aqueous solution that can also be constituted from water alkalized with a base (NaOH) or from a suitable buffer (for example Glycine buffer, sodium carbonate buffer or Tris buffer) at concentrations between 0.05 and 0.2 M. The extraction condition that has been shown to result in obtaining an extract suitable for the use envisaged is related to pH of the aqueous extraction solution, being the pH 10.5 the most effective, while the composition of the extractant or its molarity (in the range between 0.05 and 0.2 M) were not found to have a significant influence on the quality of the extract. Extraction must be carried out with a solid:liquid ratio of at least 1:5 and for a time of at least 3 hours. By keeping the pH constant throughout the extraction phase and using a solid:liquid ratio of 1:10, it is possible to extract more than 80% of the protein material in just the first 3 hours of extraction.

The solid residue obtained from extraction is then separated from the liquid phase by filtration or centrifugation or with other equivalent means. This solid residue can be submitted to a new extraction, in conditions similar to the first, and preferably for a period of time between 10 and 12 hours.

Therefore, the preferred conditions for extraction are:
a) starting from flour from extraction of grape seed oil, thus avoiding both the grinding and the delipidation steps;
b) extracting with an aqueous solution (solid:liquid ratio 1:10) buffered at pH 10.5, maintaining constant pH throughout extraction (at least 3 hours) by adding suitable amounts of 1M NaOH solution.

The liquid phase separated by extraction, optionally combined with the liquid phases obtained from subsequent extractions, is acidified to pH 3.0 by adding 6N hydrochloric acid. At this pH, some of the proteins present in the extract precipitate (Fazio et al., 1983, *ref. cit.*; El-Aal, M.H.A, 1992, Die Nahrung 2: 112-118). Moreover, this results in removal of the protein fraction potentially soluble at the pH of the wine to be treated, which normally has values around 3.

The protein precipitate can be recovered by centrifugation or by decanting. The precipitate, resuspended in slightly basic solution (0.01 N NaOH) to redissolve the proteins, is subsequently submitted to a step of purification by dialysis against water. The contents of the dialysis tube are then removed and lyophilized.

With the method of preparation disclosed, an extract is obtained with a content of protein nitrogen (total nitrogen, determined by mineralization by Kjeldahl's method and converted to protein nitrogen by multiplying by a factor of 6.25) equal to about a third of the total weight of the preparation (30-38%). The content of total polyphenols, determined by colorimetric analysis with Folin-Ciocalteu reagent (Singleton, V.L. and Rossi, J.A., 1965 Am. J. Enol. Vitic. 16:144-158) was found to be rather high (33-38% of the total weight of the preparation).

However, the presence of such a high level of polyphenols in the preparations does not constitute a problem from the organoleptic standpoint, since chemical and sensory analyses have not indicated release of polyphenols in the wine by protein preparations from grape seeds. Owing to the high content of polyphenols, the lyophilized extract has a deep reddish-brown coloration, but when tasted, there is no sensation of astringency, or of bitter or sour taste.

Finally, it was found that the pH is the most important factor in determining the amount of material extracted, with an optimum value around 10.5. Higher pH values lead to an increase in extraction yield, but the product obtained is excessively rich in bitter polyphenols which can impart unpleasant flavours to the wine. With continual correction of pH (keeping it at values close to 10.5) during extraction, excellent yields are obtained in very short times.

For use in the fining of wine, the dry protein extract, prepared as described above, can be taken up in 0.01 N NaOH. In this way, a solution of grape seed proteins is obtained which, when added to the wine to be treated in an amount between 20 and 40 g/hL, makes it possible to obtain technological performance similar to that of the animal gelatin normally used in the fining of red wines. Sensory analysis of the wines treated has also demonstrated similar effects to those obtainable using gelatin, as will be clear from the description given below of the tests carried out. The chemical, nephelometric and sensory analyses used for evaluating the effects of the preparations obtained on the characteristics of a red wine are described in detail below.

Having found differences of composition in the grape seed extracts obtained with the two different buffers used (glycine and sodium carbonate buffers), mainly with respect to the polyphenolic fraction (based on the ratio of the absorbances at 280 and at 420 nm), it was decided to use both of them in tests of fining of a red wine, to assess their effects.

The effect of clarification of the extracts in glycine, measured as reduction of the turbidity of a red wine, is similar to that obtained using oenological gelatin. This indicates that the protein extracts obtained with glycine from grape seeds can be used effectively in the clarification of red wines. Moreover, whereas the oenological gelatin commonly used removes, as well as the tannins, also the anthocyanins to a certain extent, therefore causing a degradation of the colour of red wine, the preparations from grape seeds, which also display reactivity with the tannins, have less influence on the final colour of the wine. The preparations from grape seeds have also shown considerable removal of catechins.

All the preparations from grape seeds have a significant effect on reduction of astringency relative to the control wine, but have no effect on perception of acidity and bitterness.

Regarding overall assessment of the quality of the wines, those treated were always found to be better compared with the control wine, even if statistically significant improvement only related to wines treated with grape seed extracts obtained in sodium carbonate and those treated with oenological gelatin. Regarding the other visual, olfactory and gustatory descriptors, no significant differences emerged between the preparations based on grape seeds and oenological gelatin.

It is therefore clear from the data obtained that the extracts of grape seed proteins can be used in the treatment of red wines in place of other types of protein aids, avoiding the addition of substances extraneous to grapes, which among other things might act as potential allergens. Secondly, the use of grape seed extracts for clarification of wine represents an upgrading of by-products from the grape seed oil industry.

### Experimental Part

### Preparation of grape seed extracts and assessment of the effect of pH

A preliminary study investigated the extractability of the protein component from fresh grape seeds (from Prosecco grapes, 2009 vintage) and from the residue from extraction of grape seed oil (from mixed varieties) (extraction flour).

The fresh grape seeds, after grinding, were defatted with hexane, whereas the flours obtained after industrial extraction of grape seed oil were already, by their nature, free from lipids. Analysis of the total protein nitrogen of the two starting materials (calculated as mineral nitrogen x 6.25) revealed that the flour of fresh grape seeds contains 8.1 % of protein, while that obtained after industrial extraction of the oil contains 12.2%. For this reason the first tests were performed on the extraction flour.

The main parameter taken into consideration for extraction of the proteins was the pH.

To establish the effect of pH on extractability, extractions were carried out with various buffers: 0.1M glycine buffer at pH 8.5, 9.5 and 10.5, 0.1M sodium carbonate buffer at 9.5 and 10.5 and 0.1 M Tris-HCl buffer at pH 8.5.

All the extractions were carried out in duplicate.

The first extraction was carried out for 3 hours with a solid:liquid ratio of 1:10. The residue of the first extraction was extracted further, overnight, with fresh buffer in order to obtain exhaustive extraction from the matrix. After each extraction, the solid residue was separated by centrifugation (5 minutes at 3000g). The supernatants obtained were filtered (0.45µm), and were of a deep colour. The final pH of the liquid extracts obtained was measured (Table 1).

**Table 1. pH values of the extracts measured at the end of each extraction**

| | ***final pH of extract*** | |
|---|---|---|
| *Buffer*/*pH* | *1st extraction* | *2nd extraction* |
| Glycine 8.5 | 7.93 | 7.96 |
| Glycine 9.5 | 9.17 | 9.12 |
| Glycine 10.5 | 9.84 | 9.88 |
| Tris-HCl 8.5 | 8.41 | 8.54 |
| Sodium carbonate 9.5 | 9.21 | 9.25 |
| Sodium carbonate 10.5 | 9.99 | 10.02 |

As can be seen, the pH of the extract found was, except in the case of extraction with Tris-HCl buffer, lower than the pH of the buffer solution used for extraction.

The absorbance at 280, 320 and 420 nm was then determined on all the extracts. The absorbance at 280 nm, which roughly corresponds to the content of proteins and polyphenols, had an exponential relation (R² = 0.917) with the pH measured on the extract (Fig. 1), regardless of the type of buffer used for extraction. At equal pH, the extracts in glycine buffer (indicated by the ovals in Fig. 1) always showed greater absorbance than that of the extracts in sodium carbonate.

Analysis of the absorption spectra of the extracts (Table 2) verified that the type of buffer used for extraction has an effect on the types of molecules extracted.

**Table 2. Ratios of absorbance values at 280, 320 and 420 nm of the extracts obtained with the three buffers at different pH values (first extraction)**

| *Buffer*/*pH* | *280*/*320* | *280*/*420* |
|---|---|---|
| Glycine 8.5 | 2.98 | 13.59 |
| Glycine 9.5 | 2.50 | 10.77 |
| Glycine 10.5 | 2.34 | 9.78 |
| Tris-HCl 8.5 | 2.29 | 4.53 |
| Sodium carbonate 9.5 | 2.01 | 3.35 |
| Sodium carbonate 10.5 | 2.04 | 3.72 |

The ratio 280/420 nm is particularly discriminating, and was found to be very high for the extracts in glycine buffer, with a decrease with increase in pH. In contrast, the same ratio is very low for extracts in sodium carbonate buffer. Considering that the total absorbance at 280 nm is very similar for the two buffers (Fig. 1), this would indicate that sodium carbonate extracts a larger amount of brown substances (probably polyphenols) which absorb at 420 nm.

Also considering the amount obtained from the second extraction, with duration of 10-12 hours, the yields, relative to the initial weight of flours extracted, came to about 3-4% (w/w) in extractions at pH 10.5 regardless of the buffer used. Then it was verified that, taking care to correct the pH continuously with 1 M NaOH to counter the acidifying effect of the grape seed flours, the same yield can also be obtained with a single extraction of just 3 hours.

In the next phase the extraction flours were only extracted with the two buffers that allow working at higher pH (glycine and sodium carbonate buffers), used at pH 10.5 and at two different concentrations (0.05 M and 0.2 M), using an extraction time of 3 hours with continuous correction of pH by adding 1 M NaOH. Therefore 4 lyophilized extracts were obtained (2 buffers x 2 concentrations). The yields were still around 4% by wt., without significant differences connected with the type of buffer or its molarity.

Since the grape seed proteins have minimum solubility at pH 3.0, this property was utilized for precipitating them from the extract, at the same time removing all the proteins potentially soluble at the pH of the wine. The extracts were, therefore, treated with 6N HCl, lowering the pH to 3.0. The resultant precipitate was recovered by centrifugation (10 min at 3000g), taken up in water, and dialysed exhaustively against water using membranes with cut-off of 3.5 kDa. The contents of the dialysis tube were then removed and lyophilized. The weight of the lyophilized powder was used for calculating the yield (weight/weight) of the preparation process. The yields obtained with the various buffers showed an exponential relation with the pH of the starting extracts (before acidification) (R² = 0.9458) (Fig. 2). This result indicates that the total amount of material extracted from the grape seeds at alkaline pH and insoluble at pH 3.0 is closely related to the pH value (alkaline) at which extraction takes place. However, in contrast to what was observed for the absorbance at 280 nm, taking into account the yield by weight of the precipitate at acid pH of the extracts, the extract with glycine buffer (ovals in Fig. 2) provides, relative to sodium carbonate, a lower yield of material precipitated at pH 3.0.

### Evaluation of the clarifying capacity of the preparations obtained from grape seeds

For estimating the capacity for reducing the turbidity of wine, the lyophilized preparations (precipitates obtained from the extracts by precipitation at pH 3.0) were dissolved at 40 mg/ml in 0.01 N NaOH. The solutions thus obtained were then added to an unclarified red wine (Merlot, 2009 vintage) to obtain final concentrations of 20 and 40 g of lyophilizate/hL of wine. The same wine was also treated with commercial oenological gelatin at 20 g/hL. The samples were left to decant at 20°C for 48 h and after this time the samples of wine were centrifuged at 1900g x 10 minutes (Maury et al., 2003, *ref. cit.)* and the turbidity (in nephelometric turbidity units, NTU) of the liquid phase was measured with a nephelometer. The results obtained are shown in Table 3 below.

**Table 3. Effect on the turbidity of a red wine, measured in NTU, of treatments with commercial gelatin (at 20 g/hL) and with the protein preparations from grape seeds obtained with two buffers (glycine and sodium carbonate) at two different concentrations (0.2 and 0.05 M) used at doses of 20 and 40 g/hL**

| | *Dose (g*/*hL)* | *NTU* |
|---|---|---|
| Test (not treated) | | 9.97 |
| Gelatin | 20 | 4.90 |
| Glycine 0.05M | 20 | 4.91 |
| | 40 | 4.70 |
| Glycine 0.2M | 20 | 5.58 |
| | 40 | 4.69 |
| Sodium carbonate 0.05M | 20 | 6.13 |
| | 40 | 5.83 |
| Sodium carbonate 0.2M | 20 | 5.52 |
| | 40 | 5.16 |

First of all it is clear that the extracts in glycine have greater clarifying capacity than the extracts in sodium carbonate. The same result was also obtained on other red wines. Moreover, the grape seed extracts obtained with glycine have an effect of reduction of turbidity entirely comparable to that of commercial gelatin, showing that they are effective in the process of clarification of red wine.

### Evaluation of the organoleptic effects of the preparations obtained from grape seeds

To determine the capacity for reacting with tannins, the instrumental index AMI (Astringency Mucin Index) was used, which is correlated linearly with the astringency perceived by a group of trained tasters (Monteleone E. et al., 2004, Food Quality and Preference 15: 219-227). The index is determined using an *in vitro* test designed according to the principles of predictive models of the simulation type. Mucin is used as model salivary protein. The ratio of the model saliva/stimulus volumes, the reaction pH and physiological temperature of 37°C reproduce the conditions normally prevailing in the mouth. Interaction between polyphenols and mucin and the formation of insoluble aggregates leads to the generation of turbidity, which is measured nephelometrically and expressed in nephelometric turbidity units (NTU).

A commercial extract of tannins from grape seeds (Graptan PC, Inntec, Verona) was used, at 1.8 mg/ml in 1 % ethanol, as a model phenolic system.

The effects of the various preparations of proteins from grape seeds, at a final concentration of 40 g/hL, were compared with those of gelatin (commercial oenological clarifying agent) used at 20 g/hL.

Preliminary tests verified that for all the preparations, interaction with the tannins had already gone to completion in the first half hour of treatment. However, to simulate cellar times, the extracts were left in contact with the solution to be clarified overnight.

The results showed a significant effect (one-way analysis of variance) of the treatment on the value of AMI (F=106.622; p<0.0001). The results of the test of Least Significant Difference (LSD) indicate that the AMI values of solutions of tannins treated with the preparations from grape seeds are significantly lower than that of the untreated solution of tannins (Fig. 3). However, treatment with commercial oenological gelatin was found to be the most effective in reducing the AMI value of the solution of tannins.

In general, the data obtained with this system demonstrate that the preparations from grape seeds are able to cause a significant reduction of potentially astringent phenols.

The model solutions of tannins treated with the preparations from grape seeds and with commercial oenological gelatin were assessed by a group of trained tasters, who were asked to assess bitterness, acidity and astringency and to express the perceived intensity on the assessment scale (Labelled Magnitude Scale). The treatments were found to have a significant effect only for the perception of astringency (F=11.23; p<0.0001) and the results of the LSD test confirmed those observed with the AMI test (Fig. 4). In particular, relative to the untreated solution of tannins (TQ), the protein preparations from grape seeds produced a significant decrease of astringency, although to a lower extent than oenological gelatin. However, unlike the results obtained with the test *in vitro* (AMI), sensory analysis did not find significant differences between the various protein preparations from grape seeds.

The various protein preparations from grape seeds were then used for treating a young Cabernet Sauvignon wine (3 months since completion of alcoholic fermentation) that was particularly bitter and astringent.

Based on the results obtained with tests *in vitro*, it was decided to use, in this phase, doses of 40 g/hL both for the preparations from grape seeds and for oenological gelatin, for treatment overnight before filtering the wine (Whatman GFA filters, 1.6 µm). The wines were corrected to bring the free sulphur dioxide to 20 mg/L and then bottled. The analyses were carried out after a dwell time in the bottle of two weeks. To perform the test *in vitro* (AMI), in this case it was necessary to separate the polyphenols of the wines by using a C18 cartridge (Monteleone E. et al., 2004, *ref. cit.)* before reacting with salivary mucin (Fig. 5). The AMI values of the polyphenols extracted from the treated wines were submitted to one-way analysis of variance to assess the effect of the treatment on removal of potentially astringent polyphenolic components. The treatment was found to have a significant effect on the AMI value of the phenolic extracts of the wines (F=12.77; p<0.0001). In particular, the results of the LSD test indicate that the treatment with the protein preparations from grape seeds gives a significant reduction in the AMI value of the phenolic extracts of the wines relative to the control (untreated wine), but do not demonstrate significant differences for the various preparations. Again in this test, oenological gelatin is confirmed as the most effective aid for removing potentially astringent phenols (Fig. 5).

The treated and untreated wines were finally submitted to sensory analysis by two different panels: one specifically trained for the perception of bitterness, acidity and astringency (panel 1) and a panel of tasters experienced in assessment of the overall quality of wines (panel 2). The scores obtained by the trained panel (panel 1) were submitted independently to one-way analysis of variance for evaluating the effect of the treatments on the sensory properties relating to the intensity of bitterness, of acidity and of astringency of the wine. The results demonstrated that treatment with the preparations does not cause any significant difference in intensity of bitterness and acidity (as already observed with the model solution of grape seed tannins) (Figs. 6 and 7). On the contrary, a significant decrease in astringency was identified (Fig. 8) in the treated wines respect to the control (F= 4.37; p=<0.0001). Moreover, no significant differences were found in perceived astringency in the wines treated with the protein preparations from grape seeds relative to that treated with oenological gelatin.

Finally, the panel of expert tasters (panel 2) assessed the wines with a points-based test using a specific unstructured rating scale for Cabernet Sauvignon. The results relating to astringency and to the overall assessment were processed separately. Again in this case the scores were submitted independently to one-way analysis of variance. The results confirmed that the astringency of the wines was perceived in a manner significantly different between the treatments (F=7.65; p<0.0001) (Fig. 9). The results of the LSD test showed that in the treated wines, both with gelatin and with protein preparations from grape seeds, the perception of astringency was lower than for the untreated wine, whereas no differences were found between the different treatments.

The assessment of overall quality also showed significant differences (F=2.34; p<0.05), but the results of the LSD test revealed that the only treatments that actually produced a statistically significant improvement were those with gelatin and with the two preparations obtained from extraction of grape seeds in sodium carbonate (Fig. 10).

Regarding the effects on the individual descriptors, the "radar screens" in Fig. 11 show curves corresponding to the two different tasting sessions. In the first comparison between oenological gelatin and protein preparation derived from extraction of grape seeds with 0.2 M glycine buffer, the only statistically significant differences (Student t, p < 0.05) were the improvement of olfactory harmony and the decrease in acidity in the wine treated with gelatin relative to the control (the decrease in acidity observed in the wine treated with glycine is not significant). Comparison of the effects of the various protein preparations from grape seeds did not find significant differences for any of the descriptors.

### Evaluation of the chemical effects of the preparations obtained from grape seeds

The wines were also submitted to chemical analyses to evaluate the effect of the treatments on the various classes of polyphenols (Table 4).

**Table 4. Determination of various classes of polyphenols and of the parameters of colour of a Cabernet Sauvignon wine treated overnight with 40 g/hL of gelatin or with 40 g/hL of protein preparations derived from grape seed extracts obtained with glycine (Gly) and sodium carbonate (SC) buffers at two different concentrations (0.2 and 0.05M) and then filtered.**

| | Total polypheno Is g/L | Total anthocyanins mg/L | Catechins mg/L | Tannins g/L | Oxidizability index anthocyanins | Index 280nm | Colour intensity | Hue |
|---|---|---|---|---|---|---|---|---|
| **As is** | 2.29 | 200.03 | 386.5 | 3.42 | 31.9 | 49.38 | 1.34 | 0.52 |
| **Gelatin** | 1.89 | 174.04 | 379.2 | 3.01 | 25.8 | 46.12 | 1.21 | 0.61 |
| **Gly 0.2** | 2.27 | 195.74 | 371.5 | 3.39 | 25.4 | 53.24 | 1.32 | 0.59 |
| **Gly 0.05** | 1.53 | 191.71 | 362.2 | 3.24 | 25.3 | 52.79 | 1.33 | 0.59 |
| **Sc 0.2** | 2.37 | 192.76 | 369.9 | 3.29 | 28.0 | 51.94 | 1.32 | 0.59 |
| **Sc 0.05** | 2.23 | 191.45 | 367.7 | 3.24 | 15.3 | 54.42 | 1.31 | 0.62 |

The treatment with oenological gelatin produces a 17% decrease in total polyphenols, whereas the preparations from grape seeds have little effect on reducing them, except that derived from the extract in 0.05M glycine buffer, which produces a 33% decrease in the content of total polyphenols.

Analysis of the individual classes of polyphenols shows that oenological gelatin acts by removing mainly anthocyanins and tannins, but has little effect on catechins. Conversely, the preparations from grape seeds have a more pronounced effect on catechins, but little effect on anthocyanins, while causing a decrease, even if minimal, of tannins. These differences can be important for the sensory properties of the wine, since catechins contribute to bitter taste (Kallithraka, S. et al., 1997, J. Sensory Studies 12: 25-37).

Moreover, gelatin, by removing a good part of the anthocyanins (12.5%), can cause an excessive reduction in red colour, mainly important for those wines that already have a medium-low content of anthocyanins (for example Pinot Noir, Valpolicella, etc.). In contrast, the grape seed preparations have a smaller effect on total anthocyanins (Table 4). As well as producing a minimal reduction of anthocyanins, the preparations from grape seeds also contribute to their oxidative stability. In fact, the test of oxidizability of anthocyanins, measured as resistance to bleaching by hydrogen peroxide, demonstrated that the wines treated with the preparations from grape seeds have an oxidizability index equal to or even less than that of the wine treated with gelatin.

## Claims

1. Compositions comprising grape seed extracts, **characterized in that** said extracts comprise protein nitrogen (measured as mineral nitrogen multiplied by a conversion factor of 6.25) in an amount of at least 30% (w/w) and polyphenols (determined with Folin-Ciocalteu reagent) in an amount lower than 40% (w/w).

2. Compositions comprising grape seed extracts according to claim 1, wherein the protein nitrogen is comprised from 30% and 38% (w/w) and polyphenols are comprised from 33 and 38% (w/w).

3. Method for preparing a composition comprising a grape seed extract according to claims 1 and 2, comprising at least the steps of:
- submitting materials obtained from grape seeds to extraction with an aqueous solution at a pH between 8.5 and 10.5;
- separating the liquid phase from the solid residue;
- acidifying the liquid phase to at least pH 3.0 to separate the protein fraction by precipitation;
- separating the precipitate obtained.

4. Method for preparing compositions comprising grape seed extracts according to claim 3, comprising the further steps of:
- grinding and delipidation of the materials obtained from grape seeds before the extraction step;
- dialysis of the precipitate obtained from the acidification step.

5. Method for preparing compositions comprising grape seed extracts according to claim 3, wherein the extraction is carried out with alkalized water or with a buffer selected from glycine, sodium carbonate and Tris-HCl buffers at concentrations between 0.05 and 0.2 M and with a solid:liquid ratio of at least 1:5.

6. Method for preparing compositions comprising grape seed extracts according to claim 3 or 5, wherein the extraction is carried out with an aqueous solution at pH 10.5, maintaining constant pH throughout extraction, and with a solid:liquid ratio 1:10.

7. Method for preparing compositions comprising grape seed extracts according to claims 3 to 6, wherein the materials from grape seeds are selected from fresh grape seeds and grape seed flours.

8. Use of compositions comprising grape seed extracts according to claims 1 and 2 for the treatment of wine.
